# EUROPÄISCHE PATENTANMELDUNG

(11) **EP 1 900 937 A2**
(43) Veröffentlichungstag der Anmeldung: **19.03.2008**
(21) Anmeldenummer: 07017338.0
(22) Anmeldetag: 05.09.2007
(51) Int. Cl.: F02P 19/02, F02D 41/22, F02D 41/26, F02P 17/12, B60K 6/20

(54) **Verfahren zum Verfolgen von Fehlfunktionen im Betrieb von Automobilen**

(30) Priorität: 12.09.2006 DE 102006042643
(71) Anmelder: Beru Aktiengesellschaft, 71636 Ludwigsburg (DE)
(72) Erfinder: Kernwein, Markus, 75015 Bretten-Büchig (DE)
(74) Vertreter: Twelmeier Mommer & Partner

(57) **Zusammenfassung**

Beschrieben wird ein Verfahren zum Verfolgen von Fehlfunktionen im Betrieb von Glühkerzen eines Dieselmotors in einem Fahrzeug, welcher für das Steuern seiner Glühkerzen ein Steuergerät, das Glühsteuergerät, hat, durch
- Überwachen wenigstens eines Betriebsparameters der Glühkerzen und/oder des Glühsteuergerätes,
- Erzeugen einer Fehlermeldung, wenn der überwachte Betriebsparameter von einem vordefinierten Normalwert oder Normalzustand des Betriebsparameters abweicht,
- Speichern der Fehlermeldung,

Erfindungsgemäß ist vorgesehen, dass durch Verknüpfen der Fehlermeldung mit einem Zeitparameter,
Speichern der Fehlermeldung zusammen mit dem Zeitparameter,
Suchen nach weiteren Fehlermeldungen, die mit demselben Zeitparameter verknüpft im Fahrzeug gespeichert sind, und
Zusammenführen der Fehlermeldungen, die mit demselben Zeitparameter verknüpft sind.

## Beschreibung

Die Erfindung geht von einem Verfahren mit den im Oberbegriff des Anspruchs 1 angegebenen Merkmalen aus.

Aus der MTZ Motortechnische Zeitschrift 61 (2010), Seiten 668 bis 675, "Das elektronisch gesteuerte Glühsystem ISS für Dieselmotoren", ist ein Steuergerät für die Glühkerzen eines Dieselmotors bekannt, nachfolgend als Glühsteuergerät bezeichnet, welches als wesentliche Bestandteile einen Mikroprozessor zur Steuerung aller Funktionen, mehrere MoSFET-Leistungshalbleiter zum Ein- und Ausschalten der einzelnen Glühkerzen, eine elektrische Schnittstelle zur Kommunikation mit der Motorsteuerung und eine interne Spannungsversorgung für den Mikroprozessor und die Schnittstelle hat. Der Mikroprozessor steuert die Leistungshalbleiter an, liest deren Statusinformationen und kommuniziert über die elektrische Schnittstelle mit der Motorsteuerung. Die Schnittstelle nimmt die Anpassung der Signale vor, die zur Kommunikation zwischen Motorsteuerung und Mikroprozessor benötigt werden. Das Glühsteuergerät wird vorzugsweise direkt am Motor angebaut.

Die Glühkerzen werden im ISS Glühsystem mit den Leistungshalbleitern einzeln angesteuert. Das ermöglicht selektive Diagnose- und Schutzfunktionen. Eine Überstrom-Erkennung unterbricht den betroffenen Glühstromkreis bei zu hohen Lastströmen, etwa infolge eines Kurzschlusses. Wenn die Leistungshalbleiter durch Eigenerwärmung oder durch zu hohe Umgebungstemperaturen eine unzulässig hohe Temperatur annehmen, erfolgt eine Abschaltung, die eine Zerstörung der Leistungshalbleiter verhindert. Auch ein offener Lastkreis kann erkannt werden. Alle diese Zustandsinformationen lassen sich ebenso wie die vom Glühsystem aufgenommene elektrische Leistung der Motorsteuerung übermitteln.

Aufgetretene Fehler können beim ISS Glühsystem nach der Erkennung an das Motorsteuergerät gemeldet und in einem Fehlerspeicher des Motorsteuergerätes gespeichert werden. Daneben gibt es im Glühsteuergerät einen Fehlerspeicher, der zählt, wie häufig ein Fehler auftritt.

Die Einträge im Fehlerspeicher des Motorsteuergerätes können mit Hilfe eines Diagnosecomputers ausgelesen werden, welcher in einer Werkstatt an eine Diagnoseschnittstelle des Fahrzeuges angeschlossen wird. Der Fehlerspeicher des Glühsteuergerätes kann entweder ebenfalls über diese Schnittstelle oder über direktes Kontaktieren des Glühsteuergerätes mit einem Spezialtool ausgelesen werden. Die angezeigten Fehler sollen dem Werkstattpersonal Aufschlüsse darüber geben, ob und an welcher Stelle das Glühsteuergerät ggf. reparaturbedürftig ist oder auszutauschen ist oder ob ggf. Glühkerzen auszutauschen sind. Ebenfalls soll eine nachträgliche Analyse durch den Fahrzeuglieferanten bzw. durch den Glühsteuergerätelieferanten unterstützt werden.

Der vorliegenden Erfindung liegt die Aufgabe zugrunde, das Erkennen von Fehlern und Fehlerursachen im Zusammenhang mit dem Betreiben von Glühkerzen zu erleichtern.

Diese Aufgabe wird gelöst durch ein Verfahren mit den in den Patentansprüchen 1 und 2 angegebenen Merkmalen. Vorteilhafte Weiterbildungen der Erfindung sind Gegenstand der Unteransprüche.

Erfindungsgemäß werden bei einem Dieselmotor, welcher für das Steuern seiner Glühkerzen ein Steuergerät hat, welches als Glühsteuergerät bezeichnet wird, Fehlfunktionen im Betrieb der Glühkerzen verfolgt durch
Überwachen wenigstens eines Betriebsparameters der Glühkerzen und/oder des Glühsteuergerätes,
Erzeugen einer Fehlermeldung, wenn der überwachte Betriebsparameter von einem vordefinierten Normalwert oder Normalzustand des ersten Betriebsparameters abweicht, und
Speichern der Fehlermeldung in einem Fehlerspeicher und ggf.
Abfragen der gespeicherten Fehlermeldung über eine Diagnoseschnittstelle.
Dabei werden die Fehlermeldungen, die den überwachten Betriebsparameter betreffen, mit einem Zeitparameter verknüpft gespeichert. Der Zeitparameter gibt direkt oder indirekt an, wann der Fehler aufgetreten ist, so dass anhand der gespeicherten Fehlermeldung nicht nur die Art des Fehlers erkennbar ist, sondern auch nachvollziehbar ist, wann der Fehler aufgetreten ist. Dabei kommt es nicht darauf an, den genauen Zeitpunkt nach Datum und Tageszeit zu kennen, obwohl auch das im Rahmen der Erfindung möglich ist, wenn das Fahrzeug über einen Zeitgeber verfügt, der ein solches Zeitsignal in elektronisch speicherbarer Form liefert; als ein solcher Zeitgeber käme z. B. eine Funkuhr infrage. Für Zwecke der Erfindung genügt es, die Fehlermeldungen mit einem solchen Zeitparameter zu verknüpfen, der es möglich macht, festzustellen, ob mehrere gemeldete Fehler, die unterschiedliche oder gleiche Betriebsparameter betreffen, gleichzeitig aufgetreten sind. Dazu kann zwar auf ein Welt-Zeit-Normal zurückgegriffen werden, es genügt aber eine relative, auf das jeweilige Fahrzeug bezogene, für das Fahrzeug individuelle Zeitbasis, wofür unter anderem
die Betriebszeit des Glühsteuergerätes,
die Betriebszeit des Motorsteuergerätes, wenn es mit dem Glühsteuergerät verknüpft ist,
das elektrische Signal eines Kilometerzählers
oder das elektrische Signal eines Zählers, welcher die Umdrehungen einer Kurbelwelle oder einer Nockenwelle des Motors zählt,
in Betracht kommen. Der Zeitparameter wird mit der Fehlermeldung verknüpft gespeichert und kann zusammen mit der Fehlermeldung an einer Diagnoseschnittstelle ausgelesen werden.

Vorzugsweise wird wenigstens ein weiterer Betriebsparameter überwacht und eine Fehlermeldung erzeugt, wenn der überwachte weitere Betriebsparameter von seinem vordefinierten Normalwert oder Normalzustand abweicht. Auch die weitere Fehlermeldung wird mit einem Zeitparameter verknüpft gespeichert, wobei der Zeitparameter für den ersten und jeden weiteren überwachten Betriebsparameter übereinstimmend gewählt wird. Das macht es möglich, unter den mit demselben Zeitparameter verknüpften Fehlermeldungen für gleiche oder unterschiedliche Betriebsparameter jene herauszusuchen, die gleichzeitig aufgetretene Fehler betreffen. Diese Suche wird erfindungsgemäß durchgeführt und die dadurch aufgefundenen Fehlermeldungen werden zusammengeführt. Aus dem gleichzeitigen Auftreten unterschiedlicher Fehler kann auf wirkungsmä-ßige Zusammenhänge und auf ursächliche Zusammenhänge zwischen den gleichzeitig aufgetretenen Fehlern geschlossen werden, was die Diagnose der Fehlerursache ebenso erleichtert wie ihre Behebung.

Erfindungsgemäß können nicht nur gleichzeitig gemeldete unterschiedliche Fehler, sondern auch Meldungen ein und desselben Fehlers zusammengeführt werden, die in unterschiedlichen Geräten registriert wurden. Zu erkennen, dass sich ein Fehler in unterschiedlichen Geräten bemerkbar gemacht hat, ist ebenfalls hilfreich, wenn es darum geht, die Fehlerursache herauszufinden und zu beseitigen.

Weiterhin ist es hilfreich, wenn nicht nur das Auftreten eines Fehlers oder mehrerer Fehler registriert wird, sondern wenn beim Auftreten eines Fehlers weitere Betriebsparameter, vorzugsweise alle überwachten Betriebsparameter, abgefragt und mit demselben Zeitparameter wie der aufgetretene Fehler gespeichert werden, so dass bei einer späteren Fehleranalyse die übrigen Betriebsparameter auch dann berücksichtigt werden können, wenn sie keinen Anlass zu einer Fehlermeldung gegeben haben (Anspruch 2). Bei der Fehleranalyse liegt dann nicht nur der Fehler selbst vor, sondern auch eine Momentaufnahme seiner "Umgebung", welche durch die weiteren überwachten Betriebsparameter gebildet wird.

Es kann die Fehlerdiagnose erleichtern, wenn das Auftreten eines Fehlers im Zusammenhang mit einem gleichzeitig erhobenen Status weiterer Betriebsparameter betrachtet werden kann, besonders dann, wenn dazu Meldungen betrachtet werden, die aus einem anderen Gerät stammen als die Fehlermeldung. So ist es z. B. sinnvoll, eine aus dem Glühsteuergerät stammende Fehlermeldung im Zusammenhang mit Meldungen aus einem Motorsteuergerät zu betrachten.

Der Status mehrer, vorzugsweise aller überwachter Betriebsparameter kann regelmäßig wiederkehrend aufgenommen werden. Vorzugsweise wird jedoch nicht jeder erhobene Status der überwachten Betriebsparameter auch gespeichert. Eine Speicherung des Wertes oder Zustandes der überwachten Betriebsparameter findet vorzugsweise nur dann statt, wenn bei einem Betriebsparameter eine Abweichung von seinem vordefinieren Normalwert oder Normalzustand festgestellt wird, die als Fehler eingestuft wird.

Es ist aber auch möglich, die verschiedenen Betriebsparameter nicht gleichzeitig, sondern individuell zu unterschiedlich gewählten Zeitpunkten zu überwachen. Wird dann bei einem Betriebsparameter ein Fehler festgestellt, kann das als Auslöser benutzt werden, um den Wert oder Zustand der übrigen Betriebsparameter zeitnah zu erfassen und zu speichern, wobei sie mit dem selben Zeitparameter verknüpft werden, mit welchem auch die Fehlermeldung verknüpft wurde. Unter zeitnah versteht die vorliegende Erfindung einen zeitlichen Abstand zwischen der Fehlermeldung und der Erfassung eines weiteren Betriebsparameters, der so kurz ist, dass erwartet werden kann, dass sich der weitere Betriebsparameter innerhalb dieser Zeitspanne nicht wesentlich verändert hat. Eine wesentliche Veränderung würde dann vorliegen, wenn der geänderte Wert oder Zustand des Betriebsparameters keinen Rückschluss mehr darauf erlaubt, welchen Wert oder Zustand der weitere Betriebsparameter zum Zeitpunkt der Fehlermeldung hatte.

Besonders aussagekräftig ist die Abfrage der weiteren Betriebsparameter dann, wenn bei ihnen ein weiterer Fehler festgestellt wird, der mit der ersten Fehlermeldung in Verbindung gebracht werden kann. Die erfassten weiteren Betriebsparameter werden aber vorzugsweise unabhängig davon, ob bei ihnen ein weiterer Fehler aufgetreten ist oder nicht, gespeichert, um eine Fehlermeldung im Umfeld des Status der weiteren Betriebsparameter betrachten zu können.

Wenn im Falle einer Fehlermeldung weitere Betriebsparameter abgefragt werden, müssen es nicht in jedem Fall alle Betriebsparameter sein, die überwacht werden. Man kann sich auch darauf beschränken, ausgewählte Betriebsparameter abzufragen. Die Auswahl wird zweckmäßigerweise so getroffen, dass solche Betriebsparameter abgefragt werden, die in einem funktionellen Zusammenhang mit dem Betriebsparameter stehen, bei welchem ein Fehler festgestellt wurde. Eine solche Auswahl kann für jeden Betriebsparameter von vorneherein festgelegt und in einem Steuergerät gespeichert werden. Eine solche Auswahl kann sowohl dann zur Anwendung kommen, wenn die überwachten Betriebsparameter grundsätzlich regelmäßig und untereinander zeitgleich oder zeitnah erfasst werden als auch dann, wenn sie erst beim Auftreten einer Fehlermeldung zeitnah oder zeitgleich in Bezug auf diese erfasst werden.

Als Betriebsparameter des Betriebs von Glühkerzen eines Dieselmotors kommen unter anderem folgende Parameter in Betracht:
- Die Stromstärke, mit welcher die Glühkerzen versorgt werden,
- die zur Verfügung stehende Versorgungsspannung,
- der Innenwiderstand der Glühkerzen,
- die Temperatur der Glühkerzen,
- der Widerstand der Zuleitungen zum Heizwiderstand der Glühkerzen,
- die Temperatur im Glühsteuergerät und
- die Temperatur der Leistungshalbleiter, über welche die Glühkerzen mit Strom versorgt werden.
Weitere Betriebsparameter können nach Bedarf hinzutreten. So kann z. B. durch gleichzeitiges Feststellen einer unzulässig hohen Temperatur im Glühsteuergerät und einer unzulässig hohen Temperatur eines Leistungshalbleiters geschlossen werden, dass die erhöhte Temperatur im Glühsteuergerät durch den unzulässig heißen Leistungshalbleiter verursacht ist. Das gleichzeitige Auftreten einer unzulässig hohen Temperatur eines Leistungshalbleiters und einer unzulässigen Änderung des inneren Widerstandes der zugehörigen Glühkerze kann ein Hinweis darauf sein, dass die erhöhte Temperatur des Leistungshalbleiters ihre Ursache in einer schadhaften Glühkerze hat.

Besonders vorteilhaft ist eine Ausführungsform des Verfahrens, in welcher Fehlermeldungen aus dem Betrieb der Glühkerzen und des Glühsteuergerätes mit Fehlermeldungen verknüpft werden, welche weitere Betriebsparameter des Motors und/oder von Nebenaggregaten des Motors wie z. B. eine Kraftstoffeinspritzanlage oder ein Ladeluftverdichter, d. h. aus dem Bereich der Motorsteuerung betreffen. Der Motorsteuerung dient ein Motorsteuergerät, welches anders als ein Glühsteuergerät üblicherweise nicht unmittelbar am Motor angebaut, sondern an geschützter Stelle an der Motorspritzwand oder im Fahrzeuginnenraum unter dem Armaturenbrett eingebaut ist. Das Motorsteuergerät hat nicht nur andere Regelungs- und Steueraufgaben als das Glühsteuergerät, sondern weist gegenüber dem Glühsteuergerät auch die Besonderheit auf, dass die im Motorsteuergerät zyklisch ablaufenden Programme nicht nur zu festen Zeitpunkten ablaufen, sondern auch synchron zur Motordrehzahl. Zu den Eingangssignalen, welche ein Motorsteuergerät für die Bewältigung seiner Steuer- und Regelungsaufgaben verarbeitet, gehören die Signale von Sensoren, die z. B. Auskunft geben über
- die Drehzahl der Kurbelwelle und der Nockenwelle,
- die Winkelstellung der Kurbelwelle und der Nockenwelle,
- die Stellung einer Drosselklappe,
- den Durchsatz der angesaugten Luft,
- die Temperatur der angesaugten Luft,
- die Kühlwassertemperatur des Motors,
- die Stellung eines Unterdruck-Aktuators eines Abgas-Turboladers,
- den Umgebungsluftdruck,
- den Druck des Kraftstoffs in einer Kraftstoffeinspritzanlage,
- die Zusammensetzung des Abgases,
- den Druck in den Zylindern des Motors,
- ein Klopfen des Motors.

Alle diese Betriebsparameter können in die Überwachung einbezogen werden und für jeden der Betriebsparameter können auftretende Fehler mit einem Zeitparameter verknüpft gespeichert und ausgelesen werden. Weil erfindungsgemäß vorgesehen ist, dass der Zeitparameter, der mit den Fehlermeldungen verknüpft und gespeichert wird, immer der gleiche Zeitparameter ist, können etwaige Fehlermeldungen aller dieser Betriebsparameter daraufhin untersucht werden, ob sie gleichzeitig auftreten und es kann aus Fehlermeldungen, die Fehler betreffen, die gleichzeitig im Arbeitsbereich des Glühsteuergerätes und im Arbeitsbereich des Motorsteuergerätes aufgetreten sind, auf einen inneren Zusammenhang, auf eine gemeinsame Fehlerursache und auf zusammenhängende Auswirkungen der Fehler geschlossen werden, obwohl diese in unterschiedlichen Arbeitsbereichen, nämlich im Arbeitsbereich des Glühsteuergerätes und im Arbeitsbereich des Motorsteuergerätes auftreten.

Insbesondere kann die Motorsteuerung bei einer Fehlermeldung des Glühsteuergerätes, im Falle, dass ein Betriebsparameter des Glühsteuergerätes von seinem Normalwert oder Normalzustand abweicht, einen Fehlerspeichereintrag erzeugen, in welchem aktuelle Betriebszustände abgelegt werden, welche nur der Motorsteuerung, nicht aber dem Glühsteuergerät bekannt sind, wie z. B. der Raildruck in der Kraftstoffeinspritzanlage oder die Fahrzeuggeschwindigkeit. Der Fehlerspeichereintrag im Motorsteuergerät wird mit demselben Zeitparameter verknüpft wie der Fehlerspeichereintrag im Glühsteuergerät und kann somit diesem zugeordnet werden. Durch Zusammenführen der Fehlerspeichereinträge des Glühsteuergerätes und des Motorsteuergerätes entsteht ein detailliertes Abbild der Umgebungsbedingungen im Zeitpunkt des Fehlers. Dies Erleichtert die Suche nach der Fehlerursache und insbesondere das Nachstellen des Fehlers. Entsprechend können von weiteren Steuergeräten des Fahrzeuges, z. B. von einem Bordcomputer, weitere Betriebsparameter überwacht, ggf. gespeichert und mit dem Zeitparameter des Eintrags im Fehlerspeicher verknüpft werden, um sie in das erfindungsgemäße Verfahren einzubeziehen.

Es ist vorteilhaft, dass das Zusammenführen der Fehlermeldungen, die gleichzeitig aufgetretene Fehler betreffen, nicht voraussetzt, dass die Fehlerdaten zwischen dem Glühsteuergerät und dem Motorsteuergerät und ggf. einem sonstigen Steuergerät ausgetauscht werden. Es genügt vielmehr, die im Arbeitsbereich des Glühsteuergerätes anfallenden Fehlerdaten und vorzugsweise auch gleichzeitig oder zeitnah gewonnene fehlerfreie Betriebsdaten im Glühsteuergerät und die im Arbeitsbereich des Motorsteuergerätes anfallenden Fehler- und Betriebsdaten im Motorsteuergerät zu speichern. Werden weitere Betriebsparameter in einem dritten Steuergerät überwacht, können die dort erhobenen Fehlerdaten und fehlerfreie Betriebsdaten in diesem dritten Steuergerät gespeichert und mit einem Zeitparameter verknüpft. Es muss lediglich dafür gesorgt werden, dass das Glühsteuergerät ebenso wie das Motorsteuergerät und ein evtl. einbezogenes drittes Steuergerät den gleichen Zeitparameter mit den zu speichernden Fehlerdaten verknüpfen. Dieser Zeitparameter, z. B. der aktuelle Zählerstand eines elektronischen Kilometerzählers oder der aktuelle Zählerstand eines Kurbelwellenumdrehungszählers, können dem Motorsteuergerät, dem Glühsteuergerät und einem ggf. einbezogenen dritten Steuergerät über ein im Fahrzeug installiertes Bus-System zugeführt werden, an welches die Steuergeräte angeschlossen sind und welches eine Diagnoseschnittstelle zum Anschließen eines Diagnosecomputers hat.

Vorzugsweise werden in den Steuergeräten, insbesondere im Glühsteuergerät und im Motorsteuergerät, jeweils mehrere unterschiedliche Betriebsparameter überwacht und beim Auftreten eines Fehlers der Fehler mit dem Zeitparameter verknüpft gespeichert. Je mehr unterschiedliche Betriebsparameter überwacht werden, desto größer ist die Wahrscheinlichkeit, dass gleichzeitige Fehlermeldungen bei zwei oder mehr als zwei unterschiedlichen Betriebsparametern auftreten. Das erleichtert das Abschätzen der Fehlerfolgen und das Auffinden der Fehlerursache.

Es wird bevorzugt, die den Betrieb der Glühkerzen und des Glühsteuergerätes betreffenden Fehlermeldungen nur im Glühsteuergerät zu speichern. Fehlermeldungen, welche im Arbeitsbereich des Motorsteuergerätes auftreten, werden vorzugsweise nur im Motorsteuergerät gespeichert. Ein Austausch der beiderseitigen Fehlermeldungen zwischen Glühsteuergerät und Motorsteuergerät ist für die Fehlerdiagnose nicht erforderlich. Anpassungen zwischen den beiden Geräten, die für diesen Zweck sonst erforderlich wären, können eingespart werden. Die im Glühsteuergerät und im Motorsteuergerät gespeicherten Fehlermeldungen können über eine gemeinsame Schnittstelle gesucht, gefunden, ausgelesen und analysiert werden. Die gemeinsame Schnittstelle ist vorzugsweise Bestandteil eines Bus-Systems, welches im Fahrzeug installiert ist und an welches sowohl das Motorsteuergerät als auch weitere Steuergeräte wie das Glühsteuergerät angeschlossen sind.

Es ist aber auch möglich einzelne oder alle Fehlermeldungen des Glühsteuergerätes zusätzlich zur Speicherung im Glühsteuergerät auch in der Motorsteuerung abzulegen. Dadurch wird ein genaueres Umgebungsabbild zu dem entsprechenden Fehler erzeugt.

Vorzugsweise werden Fehlermeldungen, welche gleichzeitig aufgetretene Fehler betreffen, erst in einem Diagnosegerät, z. B. in einem in der Werkstatt üblicherweise vorhandenen Diagnosecomputer, zusammengeführt, welches bzw. welcher an die gemeinsame Schnittstelle angeschlossen wird. Im Diagnosegerät können die Fehlermeldungen, die gleichzeitig aufgetretene Fehler betreffen, auf einen ursächlichen Zusammenhang untersucht werden.

Nach dem Anschließen eines Diagnosegerätes bzw. Diagnosecomputers könnte man es einer manuell zu treffenden Auswahl überlassen, ob nach gleichzeitig aufgetretenen Fehlern gesucht werden soll oder ob die in den Fehlerspeichern gespeicherten Fehlermeldungen ohne Rücksicht darauf abgefragt werden, ob sie gleichzeitig aufgetretene Fehler oder ungleichzeitig aufgetretene Fehler betreffen. Vorzugsweise wird das erfindungsgemäße Verfahren jedoch so durchgeführt, dass beim Auslesen von gespeicherten Fehlermeldungen gleichzeitig aufgetretene Fehler automatisch angezeigt werden. Zu diesem Zweck kann in einem der angeschlossenen Steuergeräte, insbesondere im Glühsteuergerät oder im Motorsteuergerät, eine Steuereinrichtung vorgesehen sein, welche auf den Empfang eines den Auslesevorgang vorbereitenden oder auslösenden Signals die automatische Suche nach Fehlern startet, die im Glühsteuergerät und/oder im Motorsteuergerät und/oder in einem evtl. einbezogenen weiteren Steuergerät als gleichzeitig aufgetreten gespeichert sind. Eine solche Steuereinrichtung kann z. B. softwaremäßig in einem Mikroprozessor, in einem Mikrokontroller oder in einem ASIC verwirklicht sein, welcher Bestandteil des Glühsteuergerätes oder des Motorsteuergerätes oder eines anderen Steuergerätes ist. Die automatische Arbeitsweise hat den Vorteil, dass auch Werkstattpersonal, welches mit der Diagnose nicht so vertraut ist, automatisch darauf aufmerksam gemacht wird, dass die angezeigten Fehlermeldungen oder ein Teil der angezeigten Fehlermeldungen gleichzeitig aufgetretene Fehler betrifft.

Durch Mitanzeigen des Zeitpunktes ihres Auftretens kann dem Werkstattpersonal eine zusätzliche wertvolle Information vermittelt werden. Als Zeitpunkt des Auftretens gilt dabei, wie vorstehend schon erläutert, nicht nur eine absolute Zeitangabe, sondern auch eine relative Zeitangabe, wie z. B. der Kilometerstand, bei welchem gleichzeitig Fehler aufgetreten sind oder, wenn die Fehler häufiger aufgetreten sind, wann sie erstmals und wann sie letztmals aufgetreten sind.

Im Sinne der vorliegenden Erfindung wird unter einem "gleichzeitigen" Auftreten von Fehlern nicht nur verstanden, dass die Fehler exakt an ein und demselben Zeitpunkt aufgetreten sind. Vielmehr ist es zweckmäßig, die "Gleichzeitigkeit" als Zeitabschnitt von vorgegebener begrenzter Länge zu definieren oder als Abschnitt des gewählten Zeitparameters von vorgegebener begrenzter Länge zu definieren. Je nach der Art des überwachten Betriebsparameters kann es vorteilhaft sein, die Länge des Abschnitts des Zeitparameters, für welchen noch Gleichzeitigkeit angenommen wird, abhängig oder unabhängig von der Art der überwachten Betriebsparameter zu wählen. Für den Betriebsparameter "Temperatur im Glühsteuergerät" ist die Zeitspanne der Gleichzeitigkeit z. B. vorzugsweise im Sekundenbereich zu wählen, da sich die Temperatur dort nur langsam ändert.
Für den Betriebsparameter "Stromstärke" wird die Zeitspanne, in welche Gleichzeitigkeit angenommen wird, vorzugsweise kleiner als eine Sekunde gewählt, da die Stromstärke eine sehr dynamische Größe ist.

Das erfindungsgemäße Verfahren, welches das Verfolgen von Fehlfunktionen im Betrieb von Glühkerzen eines Dieselmotors erlaubt, lässt sich verallgemeinern. Auf entsprechende Weise lassen sich auch sonstige Fehlfunktionen im Betrieb von Automobilen verfolgen, die durch einen Verbrennungsmotor angetrieben sind oder einen Hybridantrieb haben, d. h. sowohl durch einen Verbrennungsmotor als auch durch einen Elektromotor antreibbar sind. Auch Fahrzeuge mit einem Ottomotor haben ein Motorsteuergerät, welches unterschiedliche Betriebsparameter überwacht und steuert, ggf. einen Bordcomputer, ein ABS-Steuergerät, ein Getriebesteuergerät, ein Klimasteuergerät, ein Reifendruckkontrollgerät usw.. Auch in diesen Fällen kann es Abhängigkeiten und Zusammenhänge geben, die durch das Zusammenführen von Fehlermeldungen und Statusmeldungen aus unterschiedlichen Steuergeräten aufgedeckt werden, z. B. wenn es darum geht, die Ursache für einen elektrischen Spannungsabfall herauszufinden. In diesem Sinne stellt der Anspruch 28 eine Verallgemeinerung des Anspruchs 1 und der Anspruch 29 eine Verallgemeinerung des Anspruchs 2 dar.

## Patentansprüche

1. Verfahren zum Verfolgen von Fehlfunktionen im Betrieb von Glühkerzen eines Dieselmotors in einem Fahrzeug, welcher für das Steuern seiner Glühkerzen ein Steuergerät, das Glühsteuergerät, hat, durch
- Überwachen wenigstens eines Betriebsparameters der Glühkerzen und/oder des Glühsteuergerätes,
- Erzeugen einer Fehlermeldung, wenn der überwachte Betriebsparameter von einem vordefinierten Normalwert oder Normalzustand des Betriebsparameters abweicht,
- Speichern der Fehlermeldung,
**gekennzeichnet durch** Verknüpfen der Fehlermeldung mit einem Zeitparameter, Speichern der Fehlermeldung zusammen mit dem Zeitparameter,
Suchen nach weiteren Fehlermeldungen, die mit demselben Zeitparameter verknüpft im Fahrzeug gespeichert sind, und
Zusammenführen der Fehlermeldungen, die mit demselben Zeitparameter verknüpft sind.

2. Verfahren zum Verfolgen von Fehlfunktionen im Betrieb von Glühkerzen eines Dieselmotors in einem Fahrzeug, welcher für das Steuern seiner Glühkerzen ein Steuergerät, das Glühsteuergerät, hat, durch
- Überwachen wenigstens eines Betriebsparameters der Glühkerzen und/oder des Glühsteuergerätes,
- Überwachen weiterer Betriebsparameter des Fahrzeuges,
- Erzeugen einer Fehlermeldung, wenn ein überwachter Betriebsparameter von einem vordefinierten Normalwert oder Normalzustand des Betriebsparameters abweicht,
- Speichern der Fehlermeldung,
**gekennzeichnet durch** Verknüpfen der Fehlermeldung mit einem Zeitparameter, Speichern der Fehlermeldung zusammen mit dem Zeitparameter,
Verknüpfen der Werte oder Zustände der übrigen überwachten Betriebsparameter mit demselben Zeitparameter wie die Fehlermeldung,
Speichern der zeitnah oder zeitgleich erfassten Werte oder Zustände (zusammen als Statusmeldungen bezeichnet) der übrigen überwachten Betriebsparameter, zusammen mit dem Zeitparameter,
Suchen nach Meldungen, welche mit demselben Zeitparameter verknüpft sind,
Zusammenführen der aus einem ersten Gerät stammenden Fehlermeldung mit jenen Meldungen, die aus einem anderen Gerät stammen und welche mit demselben Zeitparameter verknüpft sind wie die aus dem ersten Gerät stammende Fehlermeldung.

3. Verfahren nach Anspruch 1 oder 2, **dadurch gekennzeichnet, dass** Fehlermeldungen, welche einen ersten Betriebsparameter und wenigstens einen weiteren Betriebsparameter betreffen und mit demselben Zeitparameter verknüpft sind, zusammengeführt werden.

4. Verfahren nach Anspruch 1, 2 oder 3, **dadurch gekennzeichnet, dass** Fehlermeldungen, welche denselben Fehler betreffen, aber in unterschiedlichen Geräten gespeichert sind, zusammengeführt werden.

5. Verfahren nach einem der vorstehenden Ansprüche, **dadurch gekennzeichnet, dass** beim Auftreten einer Fehlermeldung weitere Betriebsparameter des Fahrzeuges erfasst, mit demselben Zeitparameter wie die Fehlermeldung verknüpft, gespeichert und beim Suchen nach weiteren Fehlermeldungen mit der aufgetretenen Fehlermeldung zusammengeführt werden.

6. Verfahren nach Anspruch 5, **dadurch gekennzeichnet, dass** die erfassten weiteren Betriebsparameter unabhängig davon, ob bei ihnen ein weiterer Fehler aufgetreten ist oder nicht, gespeichert werden.

7. Verfahren nach Anspruch 5 oder 6, **dadurch gekennzeichnet, dass** die Fehlermeldung mit Meldungen von weiteren Betriebsparametern zusammengeführt wird, die in einem anderen Gerät des Fahrzeuges erfasst wurden als der gemeldete Fehler.

8. Verfahren nach einem der vorstehenden Ansprüche, **dadurch gekennzeichnet, dass** die Werte bzw. Zustände mindestens einiger überwachter Betriebszustände zeitnah oder zeitgleich mit dem erfassten Fehler erfasst und mit demselben Zeitparameter verknüpft gespeichert werden.

9. Verfahren nach einem der vorstehenden Ansprüche, **dadurch gekennzeichnet, dass** die Werte bzw. Zustände mindestens einiger überwachter Betriebsparameter grundsätzlich zeitnah oder zeitgleich erfasst und jedenfalls dann mit demselben Zeitparameter verknüpft und gespeichert werden, wenn für einen der Betriebsparameter ein Fehler festgestellt wird.

10. Verfahren nach einem der vorstehenden Ansprüche, **dadurch gekennzeichnet, dass** nicht nur Betriebsparameter der Glühkerzen und des Glühsteuergerätes überwacht werden, sondern auch Betriebsparameter, die von oder in einem Motorsteuergerät überwacht werden.

11. Verfahren nach einem der vorstehenden Ansprüche, **dadurch gekennzeichnet, dass** zusätzlich wenigstens ein Betriebsparameter des Motors und/oder von Nebenaggregaten des Motors überwacht und eine weitere Fehlermeldung erzeugt wird, wenn der überwachte Betriebsparameter des Motors oder eines Nebenaggregates des Motors von einem vordefinierten Normalwert oder Normalzustand abweicht, dass die weitere, einen Betriebsparameter des Motors und/oder eines seiner Nebenaggregate betreffende Fehlermeldung mit demselben Zeitparameter wie beim Überwachen des ersten Betriebsparameters verknüpft gespeichert und in die Suche nach gleichzeitig aufgetretenen Fehlern einbezogen wird.

12. Verfahren nach einem der vorstehenden Ansprüche, **dadurch gekennzeichnet, dass** im Glühsteuergerät mehrere unterschiedliche Betriebsparameter überwacht werden.

13. Verfahren nach Anspruch 10 oder 11, **dadurch gekennzeichnet, dass** im Motorsteuergerät mehrere unterschiedliche Betriebsparameter überwacht werden.

14. Verfahren nach einem der vorstehenden Ansprüche, **dadurch gekennzeichnet, dass** die den Betrieb der Glühkerzen und des Glühsteuergerätes betreffenden Fehlermeldungen im Glühsteuergerät gespeichert werden.

15. Verfahren nach einem der vorstehenden Ansprüche, **dadurch gekennzeichnet, dass** die Fehlermeldungen, welche die Betriebsparameter des Motors und seiner Nebenaggregate betreffen, im Motorsteuergerät gespeichert werden.

16. Verfahren nach einem der vorstehenden Ansprüche, **dadurch gekennzeichnet, dass** Meldungen, welche mit demselben Zeitparameter verknüpft sind, über eine gemeinsame Schnittstelle gesucht werden.

17. Verfahren nach einem der vorstehenden Ansprüche, **dadurch gekennzeichnet, dass** die Meldungen, welche mit demselben Zeitparameter verknüpft sind, erst in einem Diagnosegerät zusammengeführt werden, welches an eine oder mehrere Schnittstellen des Fahrzeuges, insbesondere an eine gemeinsame Schnittstelle, angeschlossen wird.

18. Verfahren nach einem der vorstehenden Ansprüche, **dadurch gekennzeichnet, dass** Fehlermeldungen, die mit demselben Zeitparameter verknüpft sind, im Diagnosegerät auf einen ursächlichen Zusammenhang untersucht werden.

19. Verfahren nach Anspruch 16 oder 17, **dadurch gekennzeichnet, dass** die gemeinsame Schnittstelle in einem Bus-System angeordnet wird, an welches die Geräte wie z. B. das Glühsteuergerät und das Motorsteuergerät angeschlossen sind, mit denen oder in denen die Betriebsparameter überwacht werden.

20. Verfahren nach einem der vorstehenden Ansprüche, **dadurch gekennzeichnet, dass** zwei Meldungen als gleichzeitig behandelt werden, wenn sie in einem Abschnitt des Zeitparameters von vorgegebener begrenzter Länge auftreten.

21. Verfahren nach Anspruch 20, **dadurch gekennzeichnet, dass** die Länge des Abschnitts des Zeitparameters unabhängig von der Art der überwachten Betriebsparameter gewählt wird.

22. Verfahren nach Anspruch 20, **dadurch gekennzeichnet, dass** die Länge des Abschnitts des Zeitparameters abhängig von der Art der überwachten Betriebsparameter vorgewählt wird.

23. Verfahren nach einem der vorstehenden Ansprüche, **dadurch gekennzeichnet, dass** als Zeitparameter die Betriebszeit eines Motorsteuergerätes oder die Betriebszeit des Glühsteuergerätes verwendet wird.

24. Verfahren nach einem der Ansprüche 1 bis 22, **dadurch gekennzeichnet, dass** als Zeitparameter der Kilometerstand des Fahrzeuges gewählt wird.

25. Verfahren nach einem der Ansprüche 1 bis 22, **dadurch gekennzeichnet, dass** als Zeitparameter die Anzahl der Umdrehungen einer Kurbelwelle oder einer Nockenwelle des Motors gewählt wird.

26. Verfahren nach einem der vorstehenden Ansprüche, **dadurch gekennzeichnet, dass** beim Auslesen von gespeicherten Fehlermeldungen gleichzeitig aufgetretene Fehler automatisch angezeigt werden.

27. Verfahren nach Anspruch 26, **dadurch gekennzeichnet, dass** im Glühsteuergerät oder im Motorsteuergerät eine Steuereinrichtung vorgesehen ist, welche auf den Empfang eines den Auslesevorgang vorbereitenden oder auslösenden Signals die automatische Suche nach Fehlern startet, die im Glühsteuergerät und/oder im Motorsteuergerät als gleichzeitig aufgetreten gespeichert sind.

28. Verfahren zum Verfolgen von Fehlfunktionen im Betrieb von Automobilen mit Antrieb durch Verbrennungsmotor oder mit Hybridantrieb durch
- Überwachen wenigstens eines Betriebsparameters des Fahrzeuges,
- Erzeugen einer Fehlermeldung, wenn der überwachte Betriebsparameter von einem vordefinierten Normalwert oder Normalzustand des Betriebsparameters abweicht,
- Speichern der Fehlermeldung,
**gekennzeichnet durch** Verknüpfen der Fehlermeldung mit einem Zeitparameter, speichern der Fehlermeldung zusammen mit dem Zeitparameter,
Suchen nach weiteren Fehlermeldungen, die mit demselben Zeitparameter verknüpft im Fahrzeug gespeichert sind, und
Zusammenführen der Fehlermeldungen, die mit demselben Zeitparameter verknüpft sind.

29. Verfahren zum Verfolgen von Fehlfunktionen im Betrieb von Automobilen mit Antrieb durch Verbrennungsmotor oder mit Hybridantrieb durch
- Überwachen mehrerer Betriebsparameter des Fahrzeuges,
- Überwachen weiterer Betriebsparameter des Fahrzeuges,
- Erzeugen einer Fehlermeldung, wenn ein überwachter Betriebsparameter von einem vordefinierten Normalwert oder Normalzustand des Betriebsparameters abweicht,
- Speichern der Fehlermeldung,
**gekennzeichnet durch** Verknüpfen der Fehlermeldung mit einem Zeitparameter,
Speichern der Fehlermeldung zusammen mit dem Zeitparameter,
Verknüpfen der Werte oder Zustände der übrigen überwachten Betriebsparameter mit demselben Zeitparameter wie die Fehlermeldung,
Speichern der zeitnah oder zeitgleich erfassten Werte oder Zustände (zusammen als Statusmeldungen bezeichnet) der übrigen überwachten Betriebsparameter, zusammen mit dem Zeitparameter,
Suchen nach Meldungen, welche mit demselben Zeitparameter verknüpft sind,
Zusammenführen der aus einem ersten Gerät des Fahrzeugs stammenden Fehlermeldung mit jenen Meldungen, die aus einem anderen Gerät des Fahrzeugs stammen und welche mit demselben Zeitparameter verknüpft sind wie die aus dem ersten Gerät stammende Fehlermeldung.
